Europäisches Patentamt

European Patent Office

Office européen des brevets

(19)

(11) Publication number: **0 625 714 A1**

## EUROPEAN PATENT APPLICATION

(21) Application number: **93108209.3**

(22) Date of filing: **19.05.93**

(51) Int. Cl.⁵: **G01S 13/76, H04J 3/06**

(43) Date of publication of application:
**23.11.94 Bulletin 94/47**

(84) Designated Contracting States:
**DE FR GB IT NL**

(71) Applicant: **TEXAS INSTRUMENTS DEUTSCHLAND GMBH**
**Haggertystrasse 1**
**D-85356 Freising (DE)**

(72) Inventor: **Schuermann,Josef**
**An der Muehle 6**
**W-8051 Oberhummel (DE)**

(74) Representative: **Schwepfinger, Karl-Heinz, Dipl.-Ing. et al**
**Prinz & Partner,**
**Manzingerweg 7**
**D-81241 München (DE)**

(54) **Method of transmitting a data message stored in a transponder device to an interrogating device.**

(57) In a method for transmitting a data message comprising a synchronization section and a data section stored in a transponder device (10) to an interrogating device (12) in full duplex mode the interrogating device (12) continuously emits an interrogating command, the receipt of which in the transponder device (10) prompts output of the data message. Both the sync section and the data section of the data message each comprise a predetermined number of bits in accordance with a given transmission protocol. In the sync section a predetermined number N of sequential bits of duration $\tau$ is replaced by a lesser number n of sequential bits of longer duration T, where: $T = \tau N/n$. The interrogating device (12) "sees" the location of the sync section and thus the start of the data section in the received data message by receiving bits having the longer duration T. For the ratio N/n a value is selected which is smaller than 1.5.

The invention relates to a method of transmitting a data message comprising a synchronization section and a data section stored in a transponder device to an interrogating device in full duplex mode in which the interrogating device continuously emits an interrogating command, the receipt of which in the transponder device prompts output of the data message, whereby both the sync section and the data section of the data message each comprise a predetermined number of bits in accordance with a given transmission protocol and whereby in the sync section a predetermined number N of sequential bits of duration $\tau$ is replaced by a lesser number n of sequential bits of longer duration T, where: $T = \tau\,N/n$ and whereby the interrogating device "sees" the location of the sync section and thus the start of the data section in the received data message by receiving bits having the longer duration T.

In transmitting a data message from a transponder device to an interrogating device it is usual to proceed on the basis of a transmission protocol which precisely defines how the data message is configured. For example it has been proposed to compose the data message of a sync section of 8 bits and a data section of 64 bits. The sync section is required so that the interrogating device receiving the data message can be synchronized to the bit rate and particularly also so that the start of the data section, containing the actual information to be transmitted, can be explicitly identified.

One possibility of identifying the sync section involves, for example, using always the same bit pattern for this section of the data message. This possibility has the disadvantage, however, that all possible bit patterns can no longer be used because should, by chance, the same bit pattern occur in the data section as in the sync section then explicitly establishing the start of the data section in the data message is no longer possible.

To eliminate this restriction as regards the content of the data section it has been proposed to apply the so-called code-violation method in the sync section. In this method it is assumed that in transmitting the data message the individual bits are output at a prescribed bit rate. To identity the sync section 3 bits in direct sequence are replaced in this section by 2 bits, the duration of which is lengthened, however, so that together they have the same duration as the 3 bits. This means that in the sync section bits having the bit rate occur which is used for the complete data message, whilst 2 bits having a slower bit rate occur with a correspondingly longer duration. The interrogating device is able to identify the sync section from the occurence of these bits of longer duration and thus "see" where the data section containing the information to be transmitted begins. Which of the 3 bits in the sync section has been replaced by 2 bits of longer duration is determined by the transmission protocol prescribed for the transmission.

This code violation method, in which three bits are replaced by two bits of longer duration, results however in disadvantages when the transmission is made in the fully duplex mode with ASK modulation. In this mode the interrogation command continuously output by the interrogating device and the answer output by the transponder device occur so that they overlap in time. "Continuously" in this sense means that the output of the interrogation commands lasts at least as long so that the aforementioned overlap in time occurs. In view of the carrier frequencies used in actual practice (132.2 kHz) at which the interrogating device outputs the interregation command and because of the bit rates of the data message (approx. 136.2 or 132.2 kHz) the spectral components produced by the bits of longer duration result in a sideband for demodulation which in the interrogating device and overlapped by the carrier frequency extends into the range of phase noise of the own transmit signals. Demodulation of the data section is made considerably more difficult by this, indeed even impossible.

The invention is based on the object of improving a method of the aforementioned kind so that the code violation method can be put to use in data exchange between a transponder device and an interrogating device even in full duplex mode with ASK modulation.

According to the invention this object is achieved by selecting a value for the ratio N/n which is smaller than 1.5.

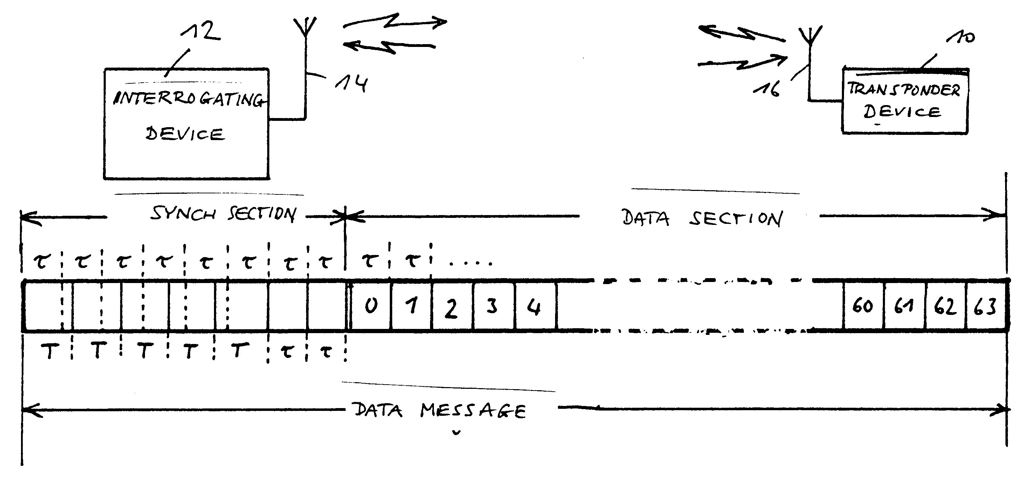

An embodiment of the invention will now be described in more detail with reference to the sole Fig. of the drawing.

A data message is to be transmitted between an interrogating device 12 and a transponder device 10, each device having an antenna 14 and 16 respectively by means of which both the interrogation command and the data message is transmitted and received respectively in the form of high-frequency signals. The data message transmitted between the transponder device 10 and the interrogating device 12 is composed of a sync section of 8 bits and a data section of 64 bits on the basis of a transmission protocol defining that in the sync section the first 6 bits in sequence are to be replaced by 5 bits, the overall duration of which is equal to that of the replaced 6 bits and that these 5 bits of correspondingly longer duration are to be followed by 2 further bits having the original duration. For the duration T of the bits provided in place of the original 6 bits we thus have:

T = N/n - $\tau$

where:
N = number of original bits to be replaced in the sync section
n = number of bits of longer duration
In the selected example the ratio N/n has the value 1.2 which means that the duration of the 5 bits in sequence replacing the 6 original bits is 1.2 times longer than the duration of the original bits. These 5 bits of longer duration are then followed, as mentioned, by 2 further bits having the original duration so that the overall duration of the sync section remains the same. By making use of the method described the speed at which the individual bytes of the data message are transmitted remains unaffected.

In the sole Fig. of the drawing the data message is shown with its sync section and its data section, it being evident that the sync section has a 5 bit duration T and a 2 bit duration $\tau$. The bits indicated dashed are those which would be in the sync section in place of the 5 bits having the duration T If all bits were to have the same durations $\tau$. From this it is evident that the 5 bits having the duration T are in place of the 6 bits of duration $\tau$.

Since the longer duration bits are extended in length merely by the factor 1.2 there is no disadvantage for transmission of the data message and in particular for the decoding to be executed in the interrogating device. Even in full duplex mode the spectral components attributable to the slower bit rate are removed sufficiently far away from the carrier frequency of the interrogation command so that no unwanted phase noise of the transmitter is able to hamper the interrogation device 12 to make demodulation difficult or even impossible.

## Claims

1. A method of transmitting a data message comprising a synchronization section and a data section stored in a transponder device (10) to an interrogating device (12) in full duplex mode in which the interrogating device continuously emits an interrogating command, the receipt of which in the transponder device (10) prompts output of the data message, whereby both the sync section and the data section of the data message each comprise a predetermined number of bits in accordance with a given transmission protocol and whereby in the sync section a predetermined number N of sequential bits of duration $\tau$ is replaced by a lesser number n of sequential bits of longer duration T, where: T = $\tau$ N/n and whereby the interrogating device "sees" the location of the sync section and thus the start of the data section in the received data message by receiving bits having the longer duration T, characterized in that for the ratio N/n a value is selected which is smaller than 1.5.

2. A method as set forth in claim 1 characterized in that in the sync section of the data message 6 sequential bits having the duration $\tau$ are replaced by 5 sequential bits having the duration 1.2 $\tau$.

TRANSPONDER DEVICE  10  16

INTERROGATING DEVICE  12  14

SYNCH SECTION

DATA SECTION

DATA MESSAGE

τ τ τ τ τ τ τ τ τ τ τ

0 1 2 3 4 ..... 60 61 62 63

T T T T T

| | European Patent Office | EUROPEAN SEARCH REPORT | Application Number |
|---|---|---|---|
| | | | EP 93 10 8209 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 194 201 (STEIN) 18 March 1980 * abstract * | 1 | G01S13/76 H04J3/06 |
| A | US-A-4 589 120 (MENDALA) 13 May 1986 * column 2, line 54 - column 4, line 56 * | 1,2 | |
| | | | TECHNICAL FIELDS SEARCHED (Int. Cl.5) |
| | | | G01S H04J H04L |

The present search report has been drawn up for all claims

| Place of search | Date of completion of the search | Examiner |
|---|---|---|
| THE HAGUE | 11 OCTOBER 1993 | Francesco Zaccà |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document